# FASCICULE DE BREVET EUROPEEN

(11) **EP 3 297 793 B1**
(45) Date de publication et mention de la délivrance du brevet: **18.10.2023**
(21) Numéro de dépôt: 16724399.7
(22) Date de dépôt: 19.05.2016
(51) Int. Cl.: B25J 9/16

(54) **PROCEDE DE SOUDAGE MANUEL TELEOPERE ET ROBOT DE SOUDAGE METTANT EN OEUVRE UN TEL PROCEDE**
FERNGESTEUERTES MANUELLES SCHWEISSVERFAHREN UND SCHWEISSROBOTER ZUR DURCHFÜHRUNG DIESES VERFAHRENS
REMOTELY OPERATED MANUAL WELDING METHOD AND WELDING ROBOT IMPLEMENTING SUCH A METHOD

(30) Priorité: 20.05.2015 FR 1554520
(43) Date de publication de la demande: 28.03.2018
(73) Titulaire: Commissariat à l'Énergie Atomique et aux Énergies Alternatives, 75015 Paris (FR)
(72) Inventeur: PERROT, Yann, 91700 Sainte-Geneviève-des-Bois (FR); DA SILVA SIMOES, Max, 91300 Massy (FR)
(74) Mandataire: Lavialle, Bruno François Stéphane
(86) Numéro de dépôt international: PCT/EP2016/061330
(87) Numéro de publication internationale: WO 2016/184985

(56) Documents cités:
- WO-A1-2013/164622
- WO-A1-2014/088994
- US-A1- 2011 118 752
- TIAN XIA ET AL: "Augmented reality environment with virtual fixtures for robotic telemanipulation in space", INTELLIGENT ROBOTS AND SYSTEMS (IROS), 2012 IEEE/RSJ INTERNATIONAL CONFERENCE ON, IEEE, 7 October 2012 (2012-10-07), pages 5059-5064, XP032288015, DOI: 10.1109/IROS.2012.6386169 ISBN: 978-1-4673-1737-5

## Description

### DOMAINE DE L'INVENTION

La présente invention se rapporte au domaine de l'assemblage d'éléments par apport de chaleur, comme le soudage et le brasage, et plus particulièrement à l'assistance à la réalisation de tels assemblages.

### ARRIERE PLAN DE L'INVENTION

Le soudage et le brasage sont des techniques fiables d'assemblage par apport de chaleur d'éléments métalliques ou non. Les portions des éléments à assembler sont placées en regard l'une de l'autre et définissent un plan de joint qui est soumis à un apport de chaleur accompagné ou non d'un apport complémentaire de matériau de jonction. Le brasage désigne les techniques dans lesquelles la jonction se fait par diffusion, c'est-à-dire sans fusion des éléments à assembler. Le soudage désigne les techniques dans lesquelles les éléments à assembler sont fondus. Quels que soient les procédés employés (MIG, TIG, Arc submergé, fil fourré, électrode enrobée, etc..), il est nécessaire de pouvoir contrôler la trajectoire du point d'apport de chaleur (électrode, flamme du chalumeau, faisceau laser, etc..), sa vitesse de déplacement par rapport à l'assemblage ainsi que la distance à laquelle il se trouve des éléments à assembler. La tension, l'intensité et la polarité de l'arc lorsque l'apport de chaleur fait intervenir un arc électrique, le débit de gaz, l'approvisionnement d'un éventuel matériau d'apport sont également des paramètres d'assemblage qui requièrent une surveillance, notamment lors d'un changement de position en cours de soudage (cas du soudage d'un tube par exemple). Ces paramètres d'assemblage influent sur la qualité de l'assemblage (brasure ou soudure) obtenu. Des facteurs liés aux éléments à assembler tels que le niveau de préparation du joint d'assemblage notamment la présence ou non de défauts géométriques dans les joints ou des variations locales de la nature des matériaux à assembler influent également sur la qualité de l'assemblage. Il est alors nécessaire d'adapter en temps réel les paramètres d'assemblage au cours de sa réalisation. Ceci se fait en surveillant le bain de fusion (ou de brasage) qui est un indicateur fiable de la conformité des paramètres d'assemblage. La multitude des paramètres à contrôler et l'analyse du bain de fusion requièrent un savoir-faire qu'il est difficile d'automatiser. Ainsi, les opérations de soudage ou de brasage sont généralement réalisées manuellement par des opérateurs qualifiés. Ceux-ci sont alors exposés aux fumées de soudage, au rayonnement UV de la source de chaleur et doivent parfois adopter des positions peu ergonomiques, notamment lors de l'assemblage d'éléments cylindriques qui requièrent une posture dite « plafond » dans laquelle l'organe d'apport de chaleur se trouve en dessous de l'assemblage, impliquant généralement que l'opérateur positionne l'organe d'apport de chaleur au-dessus de lui, dans une position particulièrement inconfortable. L'intervention d'un opérateur impacte la répétabilité des opérations d'assemblage et représente une source d'incertitudes, donc de variabilité dans la qualité de l'assemblage réalisé.

Il est connu des robots de soudage automatisés comprenant un bras articulé sur lequel est monté une torche de soudage, généralement de type MIG ou MAG, et qui sont programmés pour réaliser un déplacement de la torche selon des paramètres prédéfinis, sur une trajectoire connue. Des robots de soudage télé-opérés sont aussi connus, par exemple de WO 2014/088994 A1. Un connaît également des robots de soudage orbital dont la torche de soudage est montée sur un support annulaire concentrique aux tubes à joindre. Un robot de soudage orbital requiert quasiment un robot spécifique à chaque diamètre de tube et est pratiquement limité aux assemblages bout à bout, excluant l'automatisation de certains types d'assemblage, comme les piquages par exemple. De tels robots requièrent une préparation rigoureuse des éléments à assembler et plusieurs essais afin de déterminer les paramètres de soudage. Chaque type d'assemblage doit faire l'objet d'une programmation spécifique et de nouveaux essais jusqu'à la validation des paramètres de soudage. Ce manque de polyvalence fait que ces robots ne sont pas adaptés aux productions unitaires ou aux petites et moyennes séries, raison pour laquelle ces séries sont toujours traitées par soudage manuel. Ainsi de telles productions souffrent d'une grande variabilité dans la qualité des assemblages réalisées qui trouve notamment son origine dans les conditions de travail particulièrement éprouvantes des opérateurs.

### OBJET DE L'INVENTION

Un but de l'invention est d'améliorer la qualité des assemblages manuels par apport de chaleur.

### RESUME DE L'INVENTION

A cet effet, on prévoit un procédé d'assistance à la réalisation d'un assemblage de deux éléments par apport de chaleur, tel qu'une soudure ou une brasure, le procédé étant mis en œuvre au moyen d'un robot télé-opéré, le robot comprenant :
- un bras articulé à l'extrémité duquel est monté un organe d'apport de chaleur, tel qu'une buse ou une électrode, l'organe d'apport de chaleur étant adapté à délivrer de la chaleur en un point d'apport de chaleur;
- des capteurs de la position du bras articulé;
- des actionneurs de guidage du bras articulé;
- un dispositif de capture vidéo du point d'apport de chaleur;
- une interface de pilotage de la trajectoire du point d'apport de chaleur;
- une unité de traitement et de commande reliée aux capteurs de position, aux actionneurs de guidage, au dispositif de capture vidéo, à l'interface de pilotage de la trajectoire. Selon l'invention, le procédé comprend les étapes suivantes :
   a) acquisition d'un type d'assemblage à réaliser ;
   b)calcul d'une trajectoire de référence du point d'apport de chaleur;
   c)définition d'une enveloppe de guidage de l'organe d'apport de chaleur autour de la trajectoire de référence ;
   d)pendant l'opération de soudage, commande des actionneurs de guidage de manière à privilégier un déplacement de l'organe d'apport de chaleur dans l'enveloppe de guidage.

Ainsi la capacité de l'opérateur à intervenir sur les paramètres de soudage lorsque cela est nécessaire est maintenue et renforcée par le fait que certains paramètres sont, par défaut, pilotés automatiquement. L'opérateur est alors en mesure de se concentrer pleinement sur les paramètres critiques et leur évolution en regard du comportement de l'assemblage au point d'apport de chaleur. La télé-opération améliore grandement les conditions d'intervention de l'opérateur, notamment en ce qui concerne son exposition aux fumées, au rayonnement UV ou l'ergonomie du poste de travail. Enfin, l'interface haptique maintient l'apport indispensable du tour de main de l'opérateur. L'ensemble de ces améliorations des conditions d'exécution de l'assemblage impacte positivement la qualité de l'assemblage.

Avantageusement, l'interface de pilotage de la trajectoire du point d'apport de chaleur est une interface haptique et le procédé comprend l'étape supplémentaire d'assurer un retour d'effort vers l'interface haptique.

Avantageusement encore, l'interface haptique comprend un bras maître à retour d'effort. Une telle interface haptique permet d'adapter le procédé à un nombre important d'outils de soudage tout en restant aussi fidèle que possible au geste naturel normalement effectué lors d'opérations d'assemblage manuels.

Selon l' invention, l'étape c) de définition d'une enveloppe de guidage comprend les étapes suivantes :
c') génération par l'unité de traitement et de commande d'un bras articulé virtuel et d'un organe d'apport de chaleur virtuel;
c") génération d'une enveloppe de guidage virtuelle par l'unité de traitement et de commande ;
et l'étape d) de commande des actionneurs de guidage comprend les étapes suivantes :
d') réalisation d'un couplage unilatéral en effort entre l'interface haptique et le bras articulé virtuel;
d") réalisation d'un couplage unilatéral en position du bras articulé virtuel vers le bras articulé;
d‴) commande du bras articulé virtuel de manière à s'opposer à un déplacement de l'organe d'apport de chaleur virtuel hors de l'enveloppe de guidage virtuelle, tout en assurant d'une part le couplage unilatéral en position du bras articulé virtuel vers le bras articulé et le couplage unilatéral en effort du bras articulé virtuel et de l'interface haptique. Le déplacement du bras articulé est assuré par le couplage unilatéral en position du bras articulé virtuel vers le bras articulé. L'utilisation d'une modélisation tridimensionnelle permet d'alléger les ressources nécessaires au calcul des interférences et à la détermination des efforts à retourner par l'unité de traitement et de commande vers l'interface haptique. L'application de contrainte de guidage au seul bras articulé virtuel permet d'alléger le volume de commande à envoyer vers les actionneurs de guidage du bras articulé qui n'ont plus alors à exercer d'efforts résistants mais uniquement des efforts de guidage.

Avantageusement encore, les actionneurs de guidage sont commandés de manière à autoriser un mouvement de balayage du point d'apport de chaleur de part et d'autre de la trajectoire de référence, ce mouvement de balayage étant commandé par l'opérateur depuis l'interface haptique. L'opérateur peut alors réaliser des assemblages pour des éléments de forte épaisseur et/ou chanfreinés qui nécessitent un balayage entre les deux éléments, particulièrement dans les phases de remplissage et de finition lorsque l'assemblage est un joint soudé.

Selon un mode de réalisation particulier, les actionneurs de guidage sont commandés de manière à contraindre le point d'apport de chaleur à suivre la trajectoire de référence. Ceci permet une application précise du point d'apport de chaleur, particulièrement pour des soudures bord à bord, et permet ainsi de limiter la zone affectée thermiquement par l'apport de chaleur, aboutissant en un assemblage de meilleure qualité.

Selon un autre mode de réalisation particulier, l'étape b) de calcul de la trajectoire de référence du point d'apport de chaleur fait intervenir au moins un des paramètres suivants : géométrie d'un plan de joint, géométrie des éléments, procédé d'assemblage. L'opérateur est alors déchargé d'opérations qui ne relèvent pas exclusivement de la gestion de l'assemblage au point d'apport de chaleur comme par exemple la gestion des interférences du bras avec les éléments à assembler. Dans un but identique, la définition de l'enveloppe de guidage pourra prendre en compte au moins une des exigences suivantes : maintien de l'orthogonalité ou d'une condition de position de l'organe d'apport de chaleur vis-à-vis de la surface d'au moins un des éléments, maintien de l'extrémité de l'organe d'apport de chaleur dans un plan de joint, absence de collision entre l'organe d'apport de chaleur, le bras et les éléments à assembler.

Avantageusement, le procédé selon l'invention comprend l'étape supplémentaire de mémoriser le type d'assemblage, la trajectoire de référence du point d'apport de chaleur ainsi que la trajectoire du point d'apport de chaleur réellement effectuée. Ainsi, l'unité de traitement peut construire une bibliothèque de trajectoires et adapter les futurs calculs de trajectoire de référence du point d'apport de chaleur en fonction des trajectoires réellement effectuée à l'aide, par exemple, d'algorithmes d'apprentissage.

Selon un mode de réalisation préféré, l'unité de traitement et de commande comprend des moyens de commande des paramètres d'assemblage, le procédé comprenant l'étape d'ajuster les paramètres d'assemblage en fonction de la position et/ou de la trajectoire du point d'apport de chaleur par rapport à l'assemblage. L'opérateur n'a plus alors à se préoccuper de la gestion des paramètres d'assemblage car l'unité de traitement agit sur ceux-ci en fonction de la configuration et la trajectoire du robot. Par exemple, dans le cas d'un soudage de tube par procédé TIG, les paramètres sont initialisés pour une soudure commençant sous les tubes à assembler. Au fur et à mesure que la torche de soudage remonte, l'inclinaison de celle-ci par rapport à la surface tangente est modifiée pour assurer que le bain soit « poussé » dans la bonne direction (vers le haut) par le flux de gaz d'inertage de façon homogène qu'on soit en-dessous ou au-dessus de la pièce. Cette inclinaison nécessite aussi un ajustement du courant dans l'arc. Cela concerne aussi la vitesse d'avance du fil de métal d'apport, dont la vitesse de dévidage est pilotable en fonction de la vitesse d'avance du soudeur.

L'invention concerne également un robot télé-opéré de comprenant :
- un bras articulé à l'extrémité duquel est monté un organe d'apport de chaleur, tel qu'une buse ou une électrode, l'organe d'apport de chaleur étant adapté à délivrer de la chaleur en un point d'apport de chaleur;
- des capteurs de la position du bras articulé;
- des actionneurs de guidage du bras articulé;
- un dispositif de capture vidéo du point d'apport de chaleur;
- une interface haptique de pilotage de la trajectoire du point d'apport de chaleur et des paramètres de soudage ;
- une unité de traitement et de commande reliée aux capteurs de position, aux actionneurs de guidage, au dispositif de capture vidéo, à l'interface haptique de pilotage de la trajectoire et des paramètres de soudage.

L'unité de traitement est agencée pour mettre en oeuvre le procédé selon l'invention.

D'autres caractéristiques et avantages de l'invention ressortiront à la lecture de la description qui suit de modes de réalisation particuliers.

### BREVE DESCRIPTION DES DESSINS

Il sera fait référence aux figures annexées parmi lesquelles :
- la figure 1 est une représentation schématique d'un premier mode de réalisation d'un robot télé-opéré ;
- la figure 2 est une vue en perspective d'un assemblage traité par le robot de la figure 1 ;
- la figure 3 est un logigramme des étapes du procédé selon le premier mode de réalisation de l'invention ;
- la figure 4 est une représentation schématique d'un modèle tridimensionnel du robot de la figure 1 ;
- la figure 5 est une représentation schématique d'un deuxième mode de réalisation d'un robot télé-opéré ;
- la figure 6 est un logigramme des étapes du procédé selon le deuxième mode de réalisation de l'invention.

### DESCRIPTION DETAILLEE DE L'INVENTION

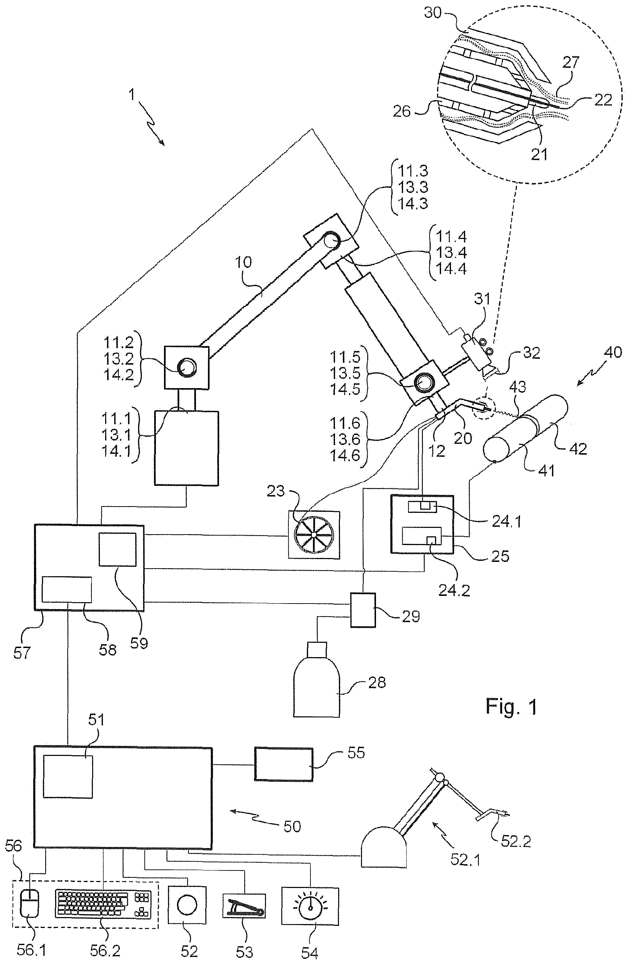

En référence à la figure 1, le procédé est mis en oeuvre au moyen d'un robot télé-opéré, généralement désigné 1, comprenant un bras 10 polaire à six axes ayant six articulations 11.1 à 11.6 de type rotoïde.

Une torche de soudage MIG 20 est montée à l'extrémité 12 du bras 10 et comprend un guide 21 tubulaire pour un fil 22 métallique issu d'un dévidoir commandé 23. Le guide 21 est relié à la borne 24.1 positive d'un générateur 25 électrique de soudage. Un assemblage 40 de deux tubes métalliques 41 et 42 est quant à lui relié à une deuxième borne 24.2 de masse du générateur 25. Ainsi le fil 22 fait office d'électrode et permet l'établissement d'un arc électrique délivrant de la chaleur en un point d'apport de chaleur 43 sur l'assemblage 40. La torche de soudage MIG 20 comprend également un diffuseur 26 de gaz d'inertage 27 -ici de l'argon- en provenance d'un réservoir 28 sur lequel est monté un ensemble détendeur/débitmètre 29. Une buse tubulaire 30 s'étend autour du guide 21 et du diffuseur 26. Le bras 10 comprend également des capteurs 13.1 à 13.6 de sa position ainsi que des actionneurs de guidage 14.1 à 14.6, respectivement implantés au niveau de chaque articulation 11.1 à 11.6. Le bras 10 comprend également une caméra 31 refroidie par liquide et positionnée de manière à capturer une image du point d'apport de chaleur 43. La caméra 31 est pourvue d'un filtre optique 32. Le robot 1 comprend également une interface haptique 50 de pilotage de la trajectoire du point d'apport de chaleur 43 et des paramètres de soudage. L'interface haptique 50 comprend notamment un écran 51 restituant les images capturées par la caméra 31, un joystick 6D 52 de type « Spacenavigator » de 3DConnexion (marque déposée), un bras maître 52.1 à retour d'effort muni d'une reproduction 52.2 de la torche de soudage 20, une pédale 53 de commande d'amorçage et d'intensité du courant de soudage, une commande 54 manuelle de vitesse d'approvisionnement du fil 22, une commande 55 de débitmètre 29 de gaz d'inertage 27, une interface 56 de sélection et d'instruction sous la forme d'une souris 56.1 et d'un clavier 56.2. Le bras maître 52.1 à retour d'effort peut être un bras de type « virtuose 6D » (marque déposée) de Haption.

Enfin, une unité 57 de traitement et de commande comprend des moyens de calcul 58, une mémoire 59 et est reliée aux capteurs de position 13.1 à 13.6, aux actionneurs de guidage 14.1 à 14.6, à la caméra 31, à la pédale 53 aux commandes 54 et 55 ainsi qu'à l'interface haptique 50.

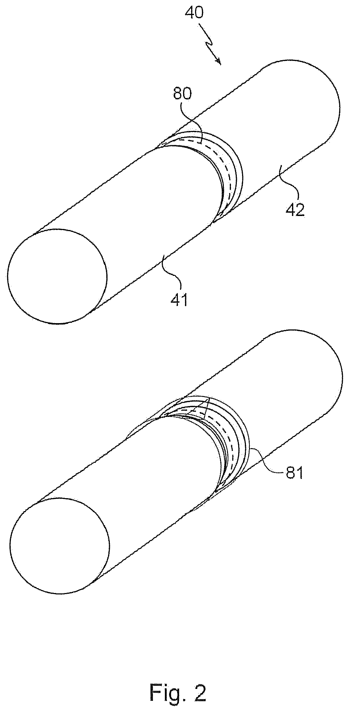

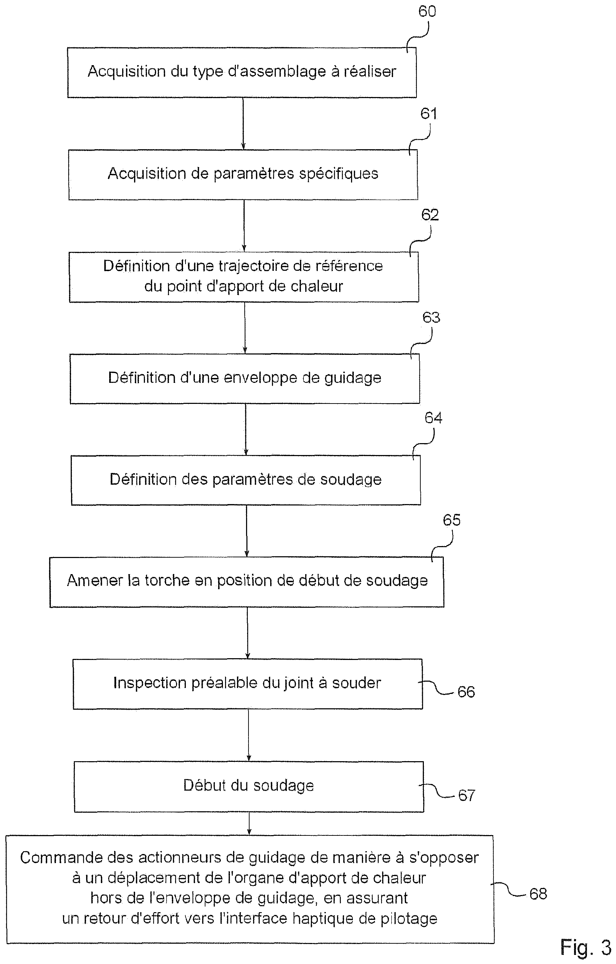

En référence aux figures 2 et 3 et selon une première étape 60 du procédé, l'opérateur sélectionne le type d'assemblage à réaliser parmi des types d'assemblage prédéfinis (assemblage linéaires, piquage, etc..) à l'aide de l'interface 56. Ici, l'opérateur sélectionne un assemblage de tubes bout à bout. Ceci permet à l'unité de traitement 57 d'acquérir le type d'assemblage à réaliser. Selon une deuxième étape 61, l'opérateur déplace le bras 10 jusqu'à ce que le guide 21 vienne au contact de l'extérieur du tube 41. Ce contact est identifié par l'unité 57 qui mesure une résistance nulle entre les bornes 24.1 et 24.2 du générateur 25. Deux autres captures de point sur l'extérieur du tube 41 permettent à l'unité 57 de déterminer le diamètre du tube 41. L'épaisseur du tube pourra également être déterminée soit par saisie sur le clavier 56.2 soit par mesure d'un point situé sur l'intérieur du tube 41 en mettant le guide 21 au contact de l'intérieur du tube 41, l'axe selon lequel s'étend les tubes 41 et 42 étant connu. Enfin, la nature du matériau des tubes 41 et 42 pourra également être déterminée par mesure de la conductivité du métal. Cette deuxième étape 61 est facultative car l'acquisition du type d'assemblage à réaliser et de ses paramètres spécifiques peut être réalisée par saisie effectuée par l'opérateur via l'interface 56.

Selon une troisième étape 62, l'unité de traitement 57 calcule une trajectoire de référence 80 du point d'apport de chaleur 43 en faisant intervenir au moins un des paramètres suivants : géométrie d'un plan de joint, géométrie des éléments, procédé d'assemblage. Le plan de joint est défini comme étant une surface dont la courbe directrice est la ligne d'assemblage des éléments 41 et 42 et dont la surface regroupe les médianes aux axes des éléments 41 et 42. L'unité de traitement 57 va ensuite définir une trajectoire linéaire qui permet d'éviter toute interférence entre la torche 20, le robot 10, les éléments 41 et 42 et qui est située dans le plan de joint. La distance séparant l'extrémité du guide 21 des éléments à souder est déterminée en fonction du type de soudage à réaliser (soudage par arc court, soudage par pulvérisation axiale ou soudage par transfert globulaire). Il est à noter que ce type de soudage peut être établi par défaut ou sélectionné via l'interface 56. Le type de soudage détermine également les plages de tension et d'intensité à appliquer.

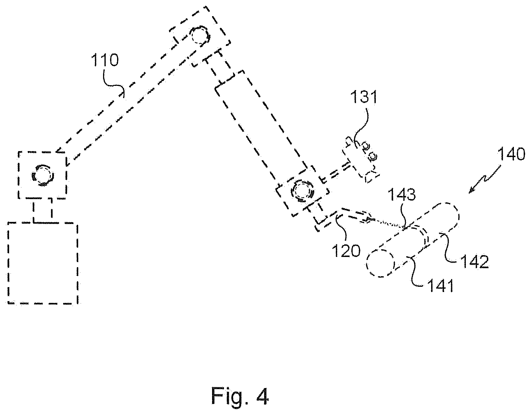

Selon un mode de réalisation particulier, l'unité 57 génère un bras articulé virtuel 110 sous la forme d'un modèle informatique tridimensionnel qui correspond en tout point au bras articulé 10 (géométrie, degrés de liberté, etc.) et à ses accessoires caméra virtuelle 131, torche virtuelle 120 ainsi que des flexibles virtuels d'approvisionnement en gaz et en fil 22. Ce modèle informatique tridimensionnel peut également inclure une représentation tridimensionnelle de l'assemblage 40 sous la forme d'un assemblage virtuel 140. Enfin, le bras articulé 110 comprend un point d'apport de chaleur virtuel 143 correspondant à une position calculée du point d'apport de chaleur 43 à partir des paramètres de soudage par défaut. La position du point d'apport de chaleur virtuel 143 est mise à jour en fonction des mouvements du bras articulé virtuel 110 et de l'évolution des paramètres de soudage. Une tel modèle informatique tridimensionnel est représenté en figure 4.

L'unité 57 réalise, dans un mode de réalisation qui ne forme pas partie de l'invention, un couplage bilatéral en position entre d'une part l'interface haptique - essentiellement le bras maître 52.1 et/ou le joystick 6D 52- et d'autre part le bras articulé virtuel 110. Ceci signifie que la position d'un des éléments couplés est reportée sur l'autre de manière bilatérale (du premier vers le second et du second vers le premier). Ainsi, une modification de la position du bras maître 52.1 est immédiatement répercutée sur la position du bras articulé virtuel 110. De la même façon, une contrainte virtuelle appliquée sur le bras articulé virtuel 110 -par exemple une interférence avec l'assemblage 140- se traduit par une commande définie par l'unité 57 à destination du bras maître 52.1 de manière à appliquer un effort résistant sur le bras maître 52.1. En raison du couplage bilatéral entre le bras maître 52.1 et le bras articulé virtuel 110 réalisé par l'unité 57, les efforts de guidage appliqués par l'unité 57sur le bras articulé virtuel 110 sont reportés sur le bras maître 52.1 et donc ressentis par l'utilisateur. Le couplage unilatéral réalisé par l'unité 57 depuis le bras articulé virtuel 110 vers le bras 10 reproduit la position du bras virtuel 110 vers le bras 10..

Selon l' invention et dans le cas de l'utilisation du joystick 6D 52 (interface non haptique de pilotage de la position du point d'apport de chaleur 43) pour réaliser les opérations de soudage, le couplage entre le joystick 6D 52 et le bras articulé virtuel 110 est unilatéral et en effort : les déplacements du joystick 6D 52 exercent une force virtuelle sur le bras articulé virtuel 110 proportionnelle à l'écart du joystick 6D 52 par rapport à sa position de repos; la position du bras virtuel 110 n'influence pas la position du joystick 6D 52 car le couplage est unilatéral depuis le joystick 6D 52 vers le bras articulé virtuel 110 .

L'unité 57 commande également en position les actionneurs de guidage 14.1 à 14.6 de manière à ce que la position du bras articulé virtuel 110 soit reproduite sur le bras articulé 10.

Selon une troisième étape 63, l'unité 57 définit une enveloppe de guidage 81 de la torche 20 autour de la trajectoire de référence 80 définie à l'étape 62. La définition de l'enveloppe de guidage 81 prend en compte au moins une des exigences suivantes : maintien de l'orthogonalité ou d'une condition de position de la torche 20 vis-à-vis de la surface de l'élément 41 ou 42, maintien de l'extrémité du guide 21 dans le plan de joint, absence de collision entre la torche 20, le bras 10 et les éléments 41 et 42. La condition de position peut concerner la distance séparant la torche 20 de l'un des éléments 41 ou 42, l'angle que réalise la torche 20 vis-à-vis de l'un de ces éléments 41 ou 42. Cette condition de position peut être fixe ou varier selon les conditions de soudage. Par exemple, l'enveloppe de guidage 81 peut prendre en compte le fait que le point d'apport de chaleur 43 doit être plus proche de l'assemblage 40 lorsque la position de soudage est la position « plafond » que lorsque la position de soudage est en position « corniche ». L'inclinaison de la torche 20 peut également varier selon la position de soudage et/ou selon les obstacles qui se présentent lors du déplacement de la torche vis-à-vis de l'assemblage. L'unité 57 modélise cette enveloppe de guidage 81 de la torche 20 sous la forme d'une enveloppe de guidage virtuelle 181 de la torche virtuelle 120 s'étendant autour d'une trajectoire de référence virtuelle 180 modélisée dans l'environnement du bras virtuel 110.Selon une quatrième étape 64, l'opérateur définit des paramètres initiaux de soudage (tension et/ou courant de soudage, vitesse d'approvisionnement de fil 22, débit de gaz d'inertage 27). Cette étape 64 est facultative car l'opérateur peut choisir de conserver des paramètres de soudage par défaut ou de valider des paramètres de soudage définis par l'unité 57.

Une fois ces opérations réalisées, l'assemblage des éléments peut commencer.

Selon une étape 65, l'unité de traitement 57 commande les actionneurs de guidage 14.1 à 14.6 de manière à amener la torche 20 dans sa position calculée de début de soudage, ici sous l'assemblage 40. Cette étape est facultative car cette mise en position de début de soudage peut être effectuée par l'opérateur à l'aide du bras maître 52.1 et/ou du joystick 6D 52. L'opérateur peut également réaliser, selon une étape 66 facultative de contrôle, une inspection préalable du joint à souder à l'aide de la caméra 32 en manipulant le bras 10 à l'aide du joystick 6D 52, du bras maître 52.1ou en ordonnant à l'unité 57 de piloter les actionneurs de guidage 14.1 à 14.6 de manière à ce que le bras 10 décrive le mouvement correspondant au déplacement du point d'apport de chaleur 43 le long de la trajectoire de référence 80. Selon une étape 67, l'opérateur entame le début du soudage. Cette étape de soudage est déclenchée par l'amorçage de l'arc électrique de soudage via la pédale 53 avec laquelle l'opérateur peut également ajuster l'intensité du courant de soudage. De manière sensiblement simultanée à l'amorçage, les commandes 54 et 55 déclenchent respectivement les approvisionnements en fil 22 et en gaz d'inertage 27 selon les paramètres de soudage préalablement définis. Enfin, une fois l'arc électrique établi entre le tube 21 et l'assemblage 40, l'unité 57 commande l'interface haptique 50-et plus particulièrement le retour d'effort vers le bras maître 52.1- de manière à maintenir la vitesse de déplacement du point d'apport de chaleur virtuel 143 relativement à l'assemblage virtuel 140 à une vitesse comprise entre quinze et quarante centimètres par minute le long de la trajectoire de référence virtuelle 180. Cette commande est ressentie par l'opérateur via l'interface haptique 50 et l'unité 57 commande également les actionneurs 14.1 à 14.6 du bras articulé 10 de manière à ce que le bras articulé 10 reproduise la position du bras articulé virtuel 110, et reproduise donc la contrainte de maintien de vitesse dans la plage définie. D'autres contraintes appliquées sur l'interface haptique comme l'orientation de la torche 20, la distance séparant celle-ci du bain de fusion (longueur de fil sorti) ou encore la vitesse et/ou l'amplitude du balayage sont également reproduites.

Au cours de l'opération d'assemblage, l'opérateur surveille sur l'écran 51 l'image capturée par la caméra 31 du point d'apport de chaleur 43 et donc analyser le bain de fusion. Il lui est possible d'agir en conséquence sur les paramètres de soudage (intensité, vitesse de fil, débit de gaz, longueur de l'arc électrique, polarité de la tension, etc.) et sur le déplacement du point d'apport de chaleur 43 via le joystick 6D 52 et/ou le bras maître 52.1. L'opérateur peut également ajuster la position de la torche de soudage MIG 20 en agissant directement sur le bras maître 52.1 de manière à déplacer le point d'apport de chaleur 43 selon l'état du bain de fusion. Toutes les modifications de position du bras maître 52.1 sont transmises à l'unité 57. Selon une étape 68, l'unité 57 commande des efforts de guidage virtuels sur le bras virtuel 110 de manière à s'opposer à un déplacement de la torche virtuelle 120 hors de l'enveloppe de guidage virtuelle 181. Le couplage bilatéral entre le bras virtuel 110 et le bras maître 52.1 réalisé par l'unité de commande 57 permet de restituer à l'opérateur, via le bras maître 52.1, le guidage virtuel. La position du bras virtuel 110, soumis aux actions conjointes de l'opérateur, via le couplage avec le bras maître 52.1, et aux efforts de guidage commandés par l'unité 57, est reproduite sur le bras articulé 10.

La commande des actionneurs de guidage 14.1 à 14.6 du bras 10 pour s'opposer à un déplacement du point d'apport de chaleur 43 plutôt que l'application d'efforts résistants sur la reproduction 52.2 de la torche de soudage 20 du bras maître 52.1 de la commande haptique 50 améliore la précision et l'efficacité du guidage côté procédé par une meilleure réactivité de la commande. En effet, La télé opération introduit des latences entre le bras 10 articulé et l'interface haptique 50. En agissant au plus près du procédé sur le bras 10, on assure que les instructions de guidage générées par l'unité de traitement et de commande 57 sont mises en oeuvre aussi rapidement que possible au niveau du bras 10, sans y ajouter la latence du couplage entre l'interface haptique 50 et le bras articulé 10. Cette latence peut être significative dans le cas d'un éloignement important du bras articulé 10 et de l'interface haptique 50.

L'unité de traitement et commande 57 gère une représentation de la position du bras articulé virtuel 110 et de son environnement. Introduire le guidage sur l'interface haptique 50 aurait nécessité une représentation de cette interface haptique 50 dans l'espace virtuel et une transformation des instructions de guidage du bras 110 vers l'espace de représentation de l'interface haptique 50, puis un report de ces efforts de guidage appliqués sur la représentation de l'interface haptique 50 vers l'interface haptique 50 réelle. En sus du fait que cela impliquerait une charge de calculs supplémentaires pour l'unité de traitement et de commande 57, c'est surtout sur l'impact du procédé sur la raideur du guidage qui est amélioré. En supprimant les intermédiaires (modèles, transformations, latences) l'architecture de commande retenue permet d'atteindre une raideur importante pour le guidage : l'utilisateur perçoit clairement le guidage et il lui faut fournir un effort intentionnel pour en sortir.

L'unité 57 peut commander l'application d'efforts élastiques s'opposant au déplacement de la torche de soudage virtuelle 120 et dont l'intensité va en croissant au fur et à mesure que l'on approche des limites définies par l'enveloppe de guidage virtuelle 181, ou appliquer un effort nul à l'intérieur de l'enveloppe de guidage virtuelle 181 puis un effort de réaction élastique de butée lorsque la torche de soudage virtuelle 120 atteint les limites de l'enveloppe de guidage virtuelle 181.

La commande du retour d'effort par l'unité 57 sur le bras virtuel 110 peut également autoriser ou restreindre d'autres mouvements comme par exemple :
a) autoriser un mouvement de balayage du point d'apport de chaleur virtuel 143 de part et d'autre de la trajectoire de référence virtuelle 180, ce mouvement de balayage étant commandé par l'opérateur depuis l'interface haptique 50;
b)contraindre le point d'apport de chaleur 43 à suivre la trajectoire de référence 80.

Le mouvement de balayage du point d'apport de chaleur virtuel 143 peut lui également faire l'objet d'une commande émise par l'unité 57 sur le bras maître 52.1 visant à générer un effort élastique lorsque la torche de soudage approche des limites définies par l'enveloppe de guidage virtuelle 181. L'unité 57 peut alternativement commander l'application par le retour d'effort du bras maître 52.1 d'un effort nul à l'intérieur de l'enveloppe de guidage virtuelle 181 puis un effort de réaction élastique de butée lorsque la torche de soudage virtuelle 120 atteint les limites de l'enveloppe de guidage virtuelle 181.

Il est à noter que l'enveloppe de guidage 81 définit les positions possibles de l'organe d'apport de chaleur- ici l'extrémité du fil 22 de la torche de soudage MIG 20- quand la trajectoire de référence 80 définit une trajectoire théorique du point d'apport de chaleur 43. A l'intérieur de l'enveloppe de guidage 81, l'organe d'apport de chaleur peut adopter une pluralité de positions dans lesquelles le point d'apport de chaleur 43 demeure sur la trajectoire de référence 80. Ces diverses positions possibles permettent d'éviter des collisions et de maintenir une bonne visibilité du bain de fusion ou encore d'allonger l'arc électrique de soudage sans modifier la position du point d'apport de chaleur 43. Le point d'apport de chaleur 43 peut également s'écarter de la trajectoire de référence 80 tant que l'organe d'apport de chaleur demeure dans l'enveloppe de guidage. En tout état de cause, la définition de l'enveloppe de guidage 81 prend en compte les possibilités de déplacement du point d'apport de chaleur 43. Les mêmes considérations s'appliquent à l'enveloppe de guidage virtuelle 181, la torche virtuelle 120, la trajectoire de référence virtuelle 180 et le point d'apport de chaleur virtuel 143.

Selon une étape 69 facultative, une fois la soudure achevée, l'opérateur effectue une passe de visualisation au cours de laquelle l'unité 57 commande les actionneurs de guidage 14.1 à 14.6 de manière à ce que la caméra 31 balaye l'intégralité de la soudure, permettant ainsi à l'opérateur d'effectuer un contrôle visuel de la soudure.

Selon un mode de réalisation particulier, l'unité 57 mémorise le type d'assemblage, la trajectoire de référence 80 du point d'apport de chaleur 43 ainsi que la trajectoire réellement effectuée par le point d'apport de chaleur 43. Un algorithme d'apprentissage intégré à l'unité 57 permet d'ajuster le calcul des futures trajectoires de référence en fonction des trajectoires réellement effectuées pour des assemblages similaires.

Les éléments identiques ou analogues à ceux précédemment décrits porteront une référence numérique identique dans la description qui suit du deuxième mode de réalisation de l'invention.

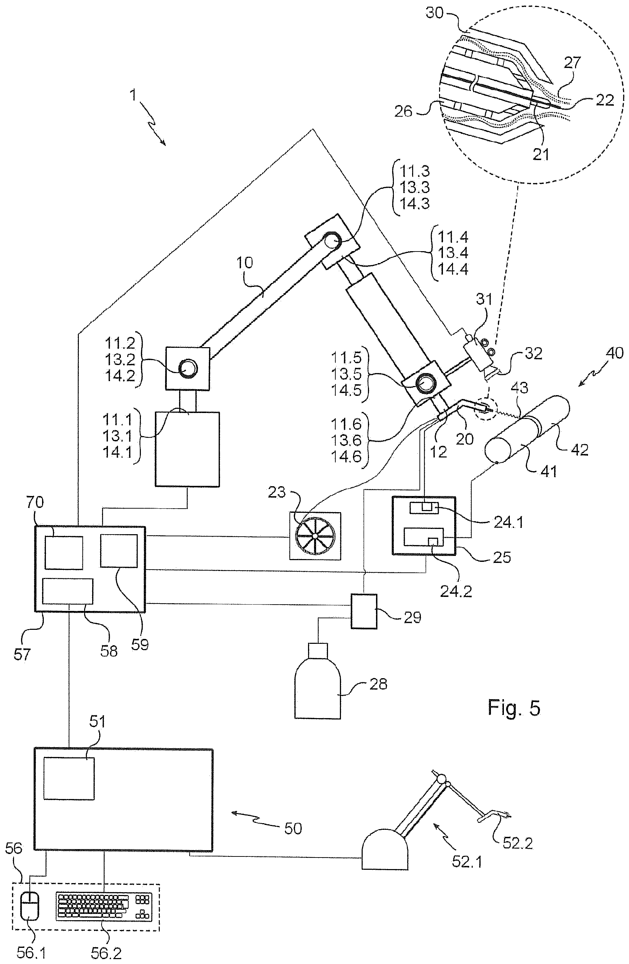

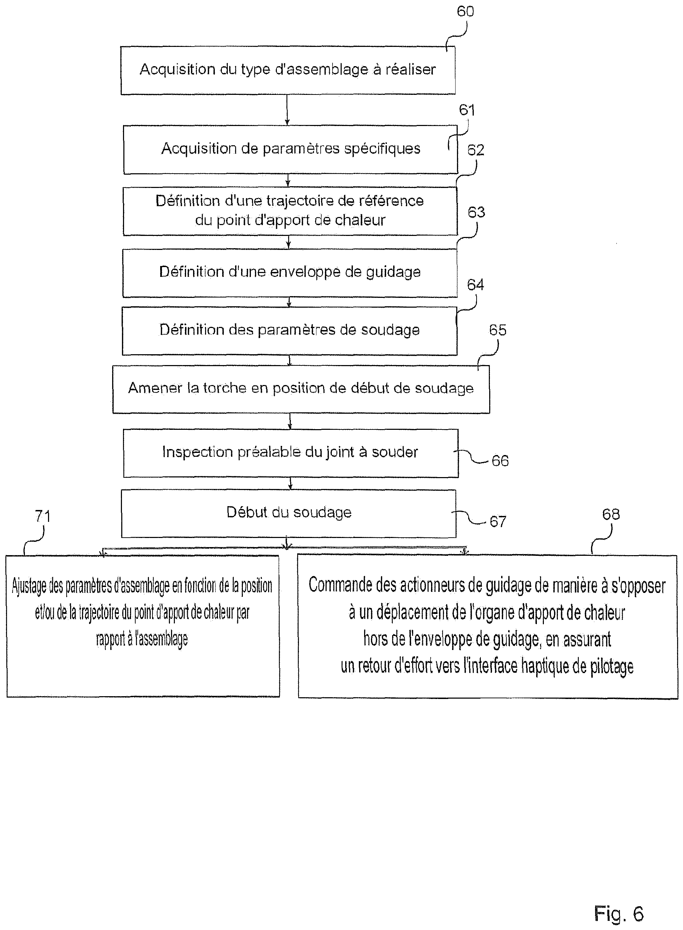

En référence aux figures 5 et 6, l'interface haptique 50 du bras télé-opéré 1 comprend un écran 51 restituant les images capturées par la caméra 31, un bras maître 52.1 à retour d'effort muni d'une reproduction 52.2 de la torche de soudage 20 et une interface 56 de sélection et d'instruction sous la forme d'une souris 56.1 et d'un clavier 56.2. L'unité de commande et de traitement 57 comprend une carte 70 électronique de commande des paramètres d'assemblage parmi lesquels :
- l'intensité et le type (continu / alternatif) du courant de soudage;
- la polarité et la valeur de la tension de soudage ;
- la vitesse d'approvisionnement du fil 22;
- le débit de gaz d'inertage 27.

Le procédé d'assistance à la réalisation de l'assemblage 40 selon le deuxième mode de réalisation de l'invention comprend les mêmes étapes 60 à 67 que celles du premier mode de réalisation. Simultanément à l'étape 68 de commande des actionneurs de guidage, une étape 71 d'ajuster les paramètres de soudage est effectuée par la carte 70 de l'unité de commande et de traitement 57 en fonction de la position et/ou de la trajectoire du point d'apport de chaleur 43.

Ainsi, lorsque l'unité de traitement et de commande 57 identifie que l'assemblage 40 se situe au-dessus du point d'apport de chaleur 43, elle commande via la carte 70 une réduction de l'intensité du courant de soudage, et ajuste les autres paramètres de soudage en fonction. Au fur et à mesure que le soudeur déplace la reproduction 52.2 de la torche de soudage 20 du bras maître 52.1, l'unité de traitement et de commande 57 reproduit ce mouvement sur le bras esclave 10 et déplace donc le point d'apport de chaleur 43. Lors de ce déplacement, la position relative du point d'apport de chaleur 43 et de l'assemblage 40 évolue et l'unité de traitement et de commande 57 ajuste via la carte 70 les paramètres d'assemblage, parmi lesquels :
- l'intensité du courant de soudage;
- la valeur de la tension de soudage (diminution en position plafond puis augmentation lorsque l'on passe en soudure montante);
- la vitesse d'approvisionnement du fil 22;
- le débit de gaz d'inertage 27.

La trajectoire (balayage, vitesse de déplacement) du point d'apport de chaleur 43 est également prise en compte dans l'étape 70 d'ajustage des paramètres de soudage.

La gestion des paramètres d'assemblage au cours du soudage par l'unité de commande et de traitement 57 permet de réduire le nombre de paramètres que doit surveiller l'opérateur pendant le soudage. L'opérateur peut alors se concentrer sur la seule manipulation de la reproduction 52.2 de la torche de soudage 20. L'unité de commande et de traitement 57 gérant également les interférences du bras 10 avec l'assemblage 40 et son environnement, la tâche de l'opérateur est allégée, ce qui réduit la fatigue et incidemment le nombre de défauts et augmente la productivité.

Bien entendu, l'invention n'est pas limitée aux modes de réalisation décrits mais englobe toute variante entrant dans le champ de l'invention telle que définie par les revendications.

En particulier,
- bien que l'assemblage comprenne deux éléments, ici sous la forme de deux tubes joints bout à bout, l'invention s'applique également à d'autres types d'assemblage comme par exemple des piquages de tubes orientés selon un angle compris entre 0 et 180°, un assemblage de produits plats en bout à bout ou sur chant, un assemblage mettant en oeuvre un tube et un produit plat ;
- bien qu'ici l'assemblage soit réalisé par soudage, l'invention s'applique également à d'autres types d'assemblage par apport de chaleur comme par exemple le brasage ;
- bien qu'ici le bras articulé soit un bras à six axes, l'invention s'applique également à d'autres types de bras comme par exemple des bras pourvu d'un nombre différent d'axes ou pourvu d'un nombre différent de degré de liberté ;
- bien qu'ici le bras robotisé soit un bras polaire comprenant exclusivement des articulations de type rotoïde, l'invention s'applique également à d'autres types de bras robotisés comme par exemple un bras cartésien comprenant des articulations prismatiques et rotoïdes ;
- bien qu'ici le robot soit pourvu d'une torche de soudage MIG, l'invention s'applique également à d'autres procédés de soudage comme par exemple les procédés MAG, à fil fourré sans gaz d'inertage, à électrode enrobée, à fil sous flux, ou encore les procédés TIG ou de brasage à la flamme, par faisceau laser ou induction ;
- bien qu'ici l'organe d'apport de chaleur comprenne un tube guide polarisant un fil faisant office d'électrode fusible, l'invention s'applique également à d'autres types d'organe d'apport de chaleur comme par exemple une électrode non fusible en tungstène (Procédé TIG) ou autre matériau ou une buse de diffusion d'un gaz de chauffe (acétylène ou autre) ;
- bien qu'ici la torche de soudage intègre le dispositif d'approvisionnement de métal d'apport, l'invention s'applique également à d'autres types de procédés dépourvus de métal d'apport (soudage autogène sans métal d'apport) ou dans lesquels le métal d'apport est amené au bain de fusion par un dispositif indépendant de celui comprenant l'organe d'apport de chaleur ;
- bien, qu'ici les approvisionnements en métal d'apport et en gaz soient déclenchés de manière automatique, l'invention s'applique également à des approvisionnements en métal d'apport et en gaz déclenchés manuellement ;
- bien qu'ici le point d'apport de chaleur soit filmé à l'aide d'une caméra refroidie par liquide et pourvu d'un filtre, l'invention s'applique également à d'autres types de moyen de capture vidéo du point d'apport de chaleur comme par exemple une caméra thermique, un appareil photo HD, ainsi qu'à d'autres moyens de protection contre le rayonnement comme par exemple un écran LCD à assombrissement automatique ;
- bien qu'ici l'interface haptique comprenne un joystick 6D de type « Spacenavigator » et un bras maître à retour d'effort muni d'une reproduction d'un torche de soudage, l'invention s'applique également à d'autres types d'interface haptique comme par exemple une interface pourvue de deux manipulateurs à retour d'efforts, ou encore un ou plusieurs joysticks à retour d'efforts ;
- bien qu'ici le bras maître à retour d'effort soit de type « virtuose 6D » de Haption, l'invention s'applique également à d'autres modèles de bras maîtres à retour d'effort ainsi qu'à d'autres fabricants de tels bras ;
- bien qu'ici l'acquisition de l'assemblage se fasse à l'aide du tube guide fil utilisé en tant que capteur de contact, l'invention s'applique également à d'autres moyens d'acquisition comme par exemple des moyens d'acquisition bidimensionnelle tel qu'une caméra, un palpeur ou des moyens d'acquisition tridimensionnelle comme par exemple un scanner 3D, un couple de caméras 2D ou des sondes ultrasoniques ;
- bien qu'ici la vitesse de déplacement de l'organe d'apport de chaleur soit comprise entre quinze et quarante centimètres par minute, l'invention s'applique également à d'autres plages prédéfinies de vitesse de déplacement de l'organe d'apport de chaleur comme par exemple des vitesses inférieures à quinze centimètres par minute ou supérieures à quarante centimètres par minute ;
- bien qu'ici l'unité de traitement et de commande génère un bras articulé virtuel ainsi qu'un modèle virtuel des accessoires qui sont rattachés (caméra, torche de soudage, etc.), l'invention s'applique également à une modélisation comprenant exclusivement un bras virtuel et un organe d'apport de chaleur virtuel ;
- bien qu'ici le procédé comprenne la génération d'un bras articulé virtuel et un organe d'apport de chaleur virtuel pour ensuite déterminer une enveloppe de guidage virtuelle, l'invention s'applique également à un procédé dépourvu d'étapes de génération d'éléments virtuels et dans lequel les situations d'interférences, et les coordonnées des différents éléments sont calculées sans passer par une modélisation tridimensionnelle. L'unité de traitement et de commande commande alors directement les actionneurs de guidage de manière à s'opposer directement à un déplacement de l'organe d'apport de chaleur hors de l'enveloppe de guidage calculée. La connexion directe de l'interface haptique et du bras articulé permet un retour des efforts de guidage appliqués au bras articulé vers l'interface haptique afin que l'opérateur puisse les ressentir ;
- bien qu'ici le bras virtuel soit un modèle informatique tridimensionnel, l'invention s'applique également à d'autres types de modèles informatique comme par exemple un modèle filaire, bidimensionnel ;
- bien qu'ici l'interface de pilotage comprenne un bras maître haptique et un joystick 6D, l'invention s'applique également à une interface comprenant exclusivement un bras maitre (haptique ou non) ou exclusivement un joystick 6D ou autre( haptique ou non) pour guider le bras virtuel, ou le bras articulé;
- bien qu'ici l'interface de pilotage soit haptique (c'est-à-dire qu'elle dispose de moyens internes de reproduction d'efforts), l'invention s'applique également à d'autres types d'interface de pilotage comme par exemple une interface dénuée de retour haptique telle qu'un joystick de type SpaceMouse (marque déposée). Les efforts de guidage appliqués sur le bras 10 ne sont pas ressentis par l'opérateur mais il en voit l'effet sur les mouvements du bras 10 via l'écran 51 et il conserve la possibilité de sortir de l'enveloppe de guidage;
- bien qu'ici la commande des paramètres d'assemblage soit effectuée par une carte électronique intégrée à l'unité de traitement et de commande, l'invention s'applique également à d'autres moyens de commande des paramètres d'assemblage comme par exemple une unité déportée connectée à l'unité de traitement et de commande ou encore un sous-programme incorporé à l'unité de traitement et de commande.

## Revendications

1. Procédé d'assistance à la réalisation d'un assemblage (40) de deux éléments (41, 42) par apport de chaleur, tel qu'une soudure ou une brasure, le procédé étant mis en oeuvre au moyen d'un robot télé-opéré (1), le robot (1) comprenant :
- un bras (10) articulé à l'extrémité (12) duquel est monté un organe d'apport de chaleur (22), tel qu'une buse ou une électrode, l'organe d'apport de chaleur (22) étant adapté à délivrer de la chaleur en un point d'apport de chaleur (43);
- des capteurs (13.1-13.6) de la position du bras articulé (10);
- des actionneurs (14.1-14.6) de guidage du bras articulé (10);
- un dispositif de capture vidéo (31) du point d'apport de chaleur (43);
- une interface (50) de pilotage de la trajectoire du point d'apport de chaleur (43);
- une unité de traitement et de commande (57) reliée aux capteurs de position (13.1-13.6), aux actionneurs de guidage (14.1-14.6), au dispositif de capture vidéo (31), à l'interface (50) de pilotage de la trajectoire et des paramètres d'assemblage,
le procédé comprenant les étapes suivantes :
a) acquisition d'un type d'assemblage à réaliser ;
b) calcul une trajectoire de référence du point d'apport de chaleur (43);
c) définition d'une enveloppe de guidage (81) de l'organe d'apport de chaleur (43) autour de la trajectoire de référence (80);
et **caractérisé par** l' étape
d) commande des actionneurs de guidage (14.1-14.6) de manière à s'opposer à un déplacement de l'organe d'apport de chaleur (22) hors de l'enveloppe de guidage, et aussi **caractérisé en ce que** l'étape c) de définition d'une enveloppe de guidage (80) comprend les étapes suivantes :
c') génération par l'unité de traitement et de commande (57) d'un bras articulé virtuel (110) et d'un organe d'apport de chaleur virtuel (122) ;
c") génération d'une enveloppe de guidage virtuelle (181) par l'unité de traitement et de commande (57) ;
et l'étape d) de commande des actionneurs de guidage comprend les étapes suivantes :
d') réalisation d'un couplage unilatéral en effort entre l'interface (50) vers le bras articulé virtuel (110);
d") réalisation d'un couplage unilatéral en position du bras articulé virtuel (110) vers le bras articulé (10) ;
d‴) commande du bras articulé virtuel (110) de manière à s'opposer à un déplacement de l'organe d'apport de chaleur virtuel (122) hors de l'enveloppe de guidage virtuelle (180), tout en assurant d'une part le couplage unilatéral en position du bras articulé virtuel (110) vers le bras articulé (10) et le couplage unilatéral en effort de l'interface haptique (50) vers le bras articulé virtuel (110) .

2. Procédé selon la revendication 1, dans lequel l'interface (50) de pilotage de la trajectoire du point d'apport de chaleur est une interface haptique, et le procédé comprend l'étape supplémentaire d'assurer un retour d'effort vers l'interface haptique (50).

3. Procédé selon la revendication 2, dans lequel l'interface haptique (50) comprend un bras maître à retour d'effort (52.1) .

4. Procédé selon l'une des revendications précédentes, dans lequel les actionneurs de guidage (14.1-14.6) sont commandés de manière à autoriser un mouvement de balayage du point d'apport de chaleur (43) de part et d'autre de la trajectoire de référence (80), ce mouvement de balayage étant commandé par un opérateur depuis l'interface haptique (50) de pilotage.

5. Procédé selon l'une des revendications précédentes, dans lequel les actionneurs de guidage (14.1-14.6) sont commandés de manière à contraindre le point d'apport de chaleur (43) à suivre la trajectoire de référence (80) .

6. Procédé selon l'une des revendications précédentes, dans lequel, le robot (1) possédant des moyens d'acquisition bidimensionnelle ou tridimensionnelle de l'assemblage, le procédé comprend une étape a') (61) comprise entre l'étape a) et b) d'acquisition des paramètres spécifiques de l'assemblage à l'aide des moyens d'acquisition bidimensionnelle ou tridimensionnelle.

7. Procédé selon l'une des revendications précédentes, dans lequel l'étape b) de calcul de la trajectoire de référence (80) du point d'apport de chaleur (43) fait intervenir au moins un des paramètres suivants : géométrie d'un plan de joint, géométrie des éléments (41, 42), procédé d'assemblage.

8. Procédé selon l'une des revendications précédentes, dans lequel la définition de l'enveloppe de guidage (81) prend en compte au moins une des exigences suivantes :
maintien de l'orthogonalité ou d'une condition de position de l'organe d'apport de chaleur (22) vis-à-vis de la surface d'au moins un des éléments (41, 42), maintien de l'extrémité de l'organe d'apport de chaleur (22) dans un plan de joint, absence de collision entre l'organe d'apport de chaleur (22), le bras articulé (10)et les éléments (41, 42) .

9. Procédé selon l'une des revendications précédentes, comprenant l'étape supplémentaire de mémoriser le type d'assemblage, la trajectoire de référence du point d'apport de chaleur (80) ainsi que la trajectoire du point d'apport de chaleur réellement effectuée.

10. Procédé selon l'une des revendications précédentes, dans lequel l'acquisition du type d'assemblage se fait par sélection d'un type d'assemblage parmi des types d'assemblage prédéfinis.

11. Procédé selon l'une des revendications précédentes, dans lequel les actionneurs de guidage (14.1-14.6) sont commandés de manière à maintenir la vitesse de déplacement de l'organe d'apport de chaleur (22) relativement à l'assemblage (40) dans une plage prédéfinie.

12. Procédé selon l'une des revendications précédentes, dans lequel l'unité de traitement et de commande (57) comprend des moyens de commande (70) des paramètres d'assemblage, le procédé comprenant l'étape d'ajuster les paramètres d'assemblage en fonction de la position et/ou de la trajectoire du point d'apport de chaleur par rapport à l'assemblage (40).

13. Robot télé-opéré (1) comprenant :
- un bras articulé (10) à l'extrémité duquel est monté un organe d'apport de chaleur (22), tel qu'une buse ou une électrode, l'organe d'apport de chaleur (22) étant adapté à délivrer de la chaleur en un point d'apport de chaleur (43);
- des capteurs (13.1-13.6) de la position du bras articulé (10);
- des actionneurs de guidage (14.1-14.6) du bras articulé (10);
- un dispositif de capture vidéo (31) du point d'apport de chaleur (43);
- une interface haptique (50) de pilotage de la trajectoire du point d'apport de chaleur (43);
- une unité de traitement et de commande (57) reliée aux capteurs de position (13.1-13.6), aux actionneurs de guidage (14.1-14.6), au dispositif de capture vidéo (31), à l'interface haptique (50) de pilotage de la trajectoire du point d'apport de chaleur (43),
l'unité de traitement et de commande (57) étant agencée pour mettre en oeuvre le procédé défini par l'une quelconque des revendications 1 à 12.

14. Robot télé-opéré (1) selon la revendication 13 comprenant une interface manuelle de pilotage des paramètres d'assemblage.

15. Robot télé-opéré (1) selon la revendication 13, l'unité de traitement et de commande (57) comprenant des moyens de commande (70) des paramètres d' assemblage.

## Patentansprüche

1. Verfahren zur Unterstützung bei der Herstellung einer Verbindung (40) von zwei Elementen (41, 42) durch Wärmezufuhr, wie beispielsweise eine Schweiß- oder Lötverbindung, wobei das Verfahren mittels eines ferngesteuerten Roboters (1) durchgeführt wird, wobei der Roboter (1) umfasst:
- einen angelenkten Arm (10), an dessen Ende (12) ein Wärmezufuhrorgan (22) angebracht ist, wie beispielsweise eine Düse oder eine Elektrode, wobei das Wärmezufuhrorgan (22) geeignet ist, Wärme an einem Wärmezufuhrpunkt (43) abzugeben;
- Positionssensoren (13.1-13.6) zur Erfassung der Position des angelenkten Arms (10);
- Führungsaktoren (14.1-14.6) zur Führung des angelenkten Arms (10);
- eine Videoaufnahmevorrichtung (31) zur Videoaufnahme des Wärmezufuhrpunkts (43);
- eine Schnittstelle (50) zur Steuerung der Bahn des Wärmezufuhrpunkts (43);
- eine Verarbeitungs- und Steuereinheit (57), die mit den Positionssensoren (13.1-13.6), den Führungsaktoren (14.1-14.6), der Videoaufnahmevorrichtung (31), der Schnittstelle (50) zur Steuerung der Bahn und von Montageparametern verbunden ist,
wobei das Verfahren die folgenden Schritte umfasst:
a) Erfassung einer durchzuführenden Verbindungsart;
b) Berechnung einer Referenzbahn des Wärmezufuhrpunkts (43);
c) Definition einer Führungshüllkurve (81) des Wärmezufuhrorgans (43) um die Referenzbahn (80);
und **gekennzeichnet durch** den Schritt
d) Steuerung der Führungsaktoren (14.1-14.6) derart, dass sie einer Bewegung des Wärmezufuhrorgans (22) außerhalb der Führungshüllkurve entgegenwirken,
und ferner **dadurch gekennzeichnet, dass** der Schritt c) der Definition einer Führungshüllkurve (80) die folgenden Schritte umfasst:
c') Erzeugung eines virtuellen angelenkten Arms (110) und eines virtuellen Wärmezufuhrorgans (122) durch die Verarbeitungs- und Steuereinheit (57);
c") Erzeugung einer virtuellen Führungshüllkurve (181) durch die Verarbeitungs- und Steuereinheit (57);
und der Schritt d) der Steuerung der Führungsaktoren die folgenden Schritte umfasst:
d') Realisierung einer einseitigen Kopplung in Kraft zwischen der Schnittstelle (50) zum virtuellen angelenkten Arm (110);
d") Realisierung einer einseitigen Kopplung in Position des virtuellen angelenkten Arms (110) zum angelenkten Arm (10);
d‴) Steuerung des virtuellen angelenkten Arms (110), derart, dass er einer Bewegung des virtuellen Wärmezufuhrorgans (122) außerhalb der virtuellen Führungshüllkurve (180) entgegenwirkt, während gleichzeitig einerseits die einseitige Kopplung in Position des virtuellen angelenkten Arms (110) zum angelenkten Arm (10) und die einseitige Kopplung in Kraft der haptischen Schnittstelle (50) zum virtuellen angelenkten Arm (110) sichergestellt wird.

2. Verfahren nach Anspruch 1, bei dem die Schnittstelle (50) zur Steuerung der Bahn des Wärmezufuhrpunktes eine haptische Schnittstelle ist, und das Verfahren den zusätzlichen Schritt des Sicherstellens einer Kraftrücckopplung zur haptischen Schnittstelle (50) umfasst.

3. Verfahren nach Anspruch 2, bei dem die haptische Schnittstelle (50) einen Master-Arm (52.1) mit Kraftrückkopplung umfasst.

4. Verfahren nach einem der vorhergehenden Ansprüche, bei dem die Führungsaktoren (14.1-14.6) derart gesteuert werden, dass eine überstreichende Bewegung des Wärmezufuhrpunkts (43) auf beiden Seiten der Referenzbahn (80) gestattet wird, wobei diese überstreichende Bewegung von einer Bedienperson von der haptischen Schnittstelle (50) zur Steuerung aus gesteuert wird.

5. Verfahren nach einem der vorhergehenden Ansprüche, bei dem die Führungsaktoren (14.1-14.6) derart gesteuert werden, dass der Wärmezufuhrpunkt (43) gezwungen wird, der Referenzbahn (80) zu folgen.

6. Verfahren nach einem der vorhergehenden Ansprüche, bei dem, unter Berücksichtigung, dass der Roboter (1) Mittel zur zweidimensionalen oder dreidimensionalen Erfassung der Verbindung umfasst, das Verfahren einen Schritt a') (61) zwischen dem Schritt a) und b) der Erfassung von spezifischen Parametern der Verbindung mit Hilfe der Mittel zur zweidimensionalen oder dreidimensionalen Erfassung umfasst.

7. Verfahren nach einem der vorhergehenden Ansprüche, bei dem der Schritt b) der Berechnung der Referenzbahn (80) des Wärmezufuhrpunkts (43) mindestens einen der folgenden Parameter einbezieht: Geometrie einer Verbindungsebene, Geometrie der Elemente (41, 42), Verbindungsverfahren.

8. Verfahren nach einem der vorhergehenden Ansprüche, bei dem die Definition der Führungshüllkurve (81) mindestens eine der folgenden Anforderungen berücksichtigt:
Beibehalten der Orthogonalität oder einer Positionsbedingung des Wärmezufuhrorgans (22) gegenüber der Oberfläche mindestens eines der Elemente (41, 42), Halten des Endes des Wärmezufuhrorgans in einer Verbindungsebene, Fehlen einer Kollision zwischen dem Wärmezufuhrorgan (22), dem angelenkten Arm (10) und den Elementen (41, 42).

9. Verfahren nach einem der vorhergehenden Ansprüche, umfassend den zusätzlichen Schritt des Speicherns der Verbindungsart, der Referenzbahn des Wärmezufuhrpunkts (80) sowie der tatsächlich zurückgelegten Bahn des Wärmezufuhrpunkts.

10. Verfahren nach einem der vorhergehenden Ansprüche, bei dem die Erfassung der Verbindungsart durch Auswahl einer Verbindungsart unter vordefinierten Verbindungsarten erfolgt.

11. Verfahren nach einem der vorhergehenden Ansprüche, bei dem die Führungsaktoren (14.1-14.6) derart gesteuert werden, dass die Bewegungsgeschwindigkeit des Wärmezufuhrorgans (22) relativ zur Verbindung (40) in einem vordefinierten Bereich gehalten wird.

12. Verfahren nach einem der vorhergehenden Ansprüche, bei dem die Verarbeitungs- und Steuereinheit (57) Steuermittel (70) zum Steuern der Verbindungsparameter umfasst, wobei das Verfahren den Schritt des Anpassens der Verbindungsparameter in Abhängigkeit von der Position und/oder der Bahn des Wärmezufuhrpunkts in Bezug auf die Verbindung (40) umfasst.

13. Ferngesteuerter Roboter (1), umfassend:
- einen angelenkten Arm (10), an dessen Ende ein Wärmezufuhrorgan (22) angebracht ist, wie beispielsweise eine Düse oder eine Elektrode, wobei das Wärmezufuhrorgan (22) geeignet ist, Wärme an einem Wärmezufuhrpunkt (43) abzugeben;
- Positionssensoren (13.1-13.6) zur Erfassung der Position des angelenkten Arms (10);
- Führungsaktoren (14.1-14.6) zur Führung des angelenkten Arms (10);
- eine Videoaufnahmevorrichtung (31) zur Videoaufnahme des Wärmezufuhrpunkts (43);
- eine haptische Schnittstelle (50) zur Steuerung der Bahn des Wärmezufuhrpunkts (43);
- eine Verarbeitungs- und Steuereinheit (57), die mit den Positionssensoren (13.1-13.6), mit den Führungsaktoren (14.1-14.6), mit der Videoaufnahmevorrichtung (31), mit der haptischen Schnittstelle (50) zur Steuerung der Bahn des Wärmezufuhrpunkts (43) verbunden ist,
wobei die Verarbeitungs- und Steuereinheit (57) ausgebildet ist, das durch irgendeinen der Ansprüche 1 bis 12 definierte Verfahren durchzuführen.

14. Ferngesteuerter Roboter (1) nach Anspruch 13, umfassend eine manuelle Schnittstelle zur Steuerung der Verbindungsparameter.

15. Ferngesteuerter Roboter (1) nach Anspruch 13, wobei die Verarbeitungs- und Steuereinheit (57) Steuermittel (70) zur Steuerung der Verbindungsparameter umfasst.

## Claims

1. A method for assisting in carrying out the assembly (40) of two elements (41, 42) by the application of heat, for example a welded or brazed joint, the method being executed by means of a remotely operated robot (1), the robot (1) comprising:
- an articulated arm (10) at the end (12) of which a heat application member (22), such as a nozzle or an electrode, is mounted, the heat application member (22) being adapted to deliver heat at a point of application of heat (43) ;
- sensors (13.1-13.6) of the position of the articulated arm (10);
- guidance actuators (14.1-14.6) of the articulated arm (10);
- a device for video capture (31) of the point of application of heat (43);
- an interface (50) for controlling the path of the point of application of heat (43);
- a processing and control unit (57) connected to the position sensors (13.1-13.6), to the guidance actuators (14.1-14.6), to the video capture device (31), and to the interface (50) for controlling the assembly path and parameters,
the method comprising the following steps:
a) acquiring a type of assembly to be carried out;
b) calculating a reference path of the point of application of heat (43);
c) defining a guidance envelope (81) of the heat application member (43) around the reference path (80); and being **characterized by** step:
d) controlling the guidance actuators (14.1-14.6) in such a way as to oppose a movement of the heat application member (22) out of the guidance envelope, and also being **characterized in that** step c) of defining a guidance envelope (80) comprises the following steps:
c') generating, by means of the processing and control unit (57), a virtual articulated arm (110) and a virtual heat application member (122);
c") generating a virtual guidance envelope (181), by means of the processing and control unit (57);
and step d) of controlling the guidance actuators comprises the following steps:
d') providing unilateral force coupling from the interface (50) toward the virtual articulated arm (110);
d") providing unilateral positional coupling from the virtual articulated arm (110) toward the articulated arm (10);
d‴) controlling the virtual articulated arm (110) so as to oppose a movement of the virtual heat application member (122) outside the virtual guidance envelope (180), while providing, on the one hand, unilateral positional coupling from the virtual articulated arm (110) toward the articulated arm (10) and unilateral force coupling from the haptic interface (50) toward the virtual articulated arm (110).

2. The method as claimed in claim 1, wherein the interface (50) for controlling the path of the point of application of heat is a haptic interface, and the method comprises the additional step of providing force feedback toward the haptic interface (50).

3. The method as claimed in claim 2, wherein the haptic interface (50) comprises a master arm with force feedback (52.1).

4. The method as claimed in any of the preceding claims, wherein the guidance actuators (14.1-14.6) are controlled so as to allow a sweeping movement of the point of application of heat (43) on either side of the reference path (80), this sweeping movement being controlled by the operator from the haptic control interface (50).

5. The method as claimed in any of the preceding claims, wherein the guidance actuators (14.1-14.6) are controlled so as to constrain the point of application of heat (43) to follow the reference path (80).

6. The method as claimed in any of the preceding claims, wherein, the robot (1) having means for the two-dimensional or three-dimensional acquisition of the assembly, the method comprises a step a') (61), placed between step a) and step b), of acquiring specific parameters of the assembly, using means of two-dimensional or three-dimensional acquisition.

7. The method as claimed in any of the preceding claims, wherein step b) of calculating the reference path (80) of the point of application of heat (43) involves the use of at least one of the following parameters: the geometry of a joint plane, the geometry of the elements (41, 42), and the method of assembly.

8. The method as claimed in any of the preceding claims, wherein the definition of the guidance envelope (81) takes into account at least one of the following requirements: maintaining the orthogonality or a condition of the positioning of the heat application member (22) in relation to the surface of at least one of the elements (41, 42), keeping the end of the heat application member (22) in a joint plane, and avoiding collisions between the heat application member (22), the articulated arm (10) and the elements (41, 42).

9. The method as claimed in any of the preceding claims, comprising the additional step of storing the type of assembly, the reference path of the point of application of heat (80), and the path of the point of application of heat that is actually followed.

10. The method as claimed in any of the preceding claims, wherein the acquisition of the type of assembly is carried out by selecting a type of assembly from among predefined types of assembly.

11. The method as claimed in any of the preceding claims, wherein the guidance actuators (14.1-14.6) are controlled so as to keep the speed of movement of the heat application member (22) relative to the assembly (40) within a predefined range.

12. The method as claimed in any of the preceding claims, wherein the processing and control unit (56) comprises means (70) for controlling the assembly parameters, the method comprising the step of adjusting the assembly parameters as a function of the location and/or the path of the point of application of heat relative to the assembly (40) .

13. A remotely operated robot (1) comprising:
- an articulated arm (10) at the end (12) of which a heat application member (22), such as a nozzle or an electrode, is mounted, the heat application member (22) being adapted to deliver heat at a point of application of heat (43) ;
- sensors (13.1-13.6) of the position of the articulated arm (10);
- guidance actuators (14.1-14.6) of the articulated arm (10);
- a device for video capture (31) of the point of application of heat (43);
- a haptic interface (50) for controlling the path of the point of application of heat (43);
- a processing and control unit (57) connected to the position sensors (13.1-13.6), to the guidance actuators (14.1-14.6), to the video capture device (31), and to the haptic interface (50) for controlling the path of the point of application of heat (43),
the processing and control unit (57) being arranged to execute the method defined by any of claims 1 to 12.

14. The remotely operated robot (1) as claimed in claim 13, comprising a manual interface for controlling the assembly parameters.

15. A remotely operated robot (1) according to claim 13, wherein the processing and control unit (57) comprises means (70) for controlling the assembly parameters.
